# EUROPEAN PATENT APPLICATION

(11) **EP 4 478 726 A1**
(43) Date of publication of application: **18.12.2024**
(21) Application number: 23179389.4
(22) Date of filing: 15.06.2023
(51) Int. Cl.: H04N 23/12, H04N 23/56

(54) **IMAGE DETECTING SYSTEM**

(71) Applicant: Koninklijke Philips N.V., 5656 AG Eindhoven (NL)
(72) Inventor: VAN ACHT, Victor Martinus Gerardus, Eindhoven (NL)
(74) Representative: Philips Intellectual Property & Standards

(57) **Abstract**

The subject-matter of the present disclosure relates to an image detecting system. The image detecting system comprises an image sensor for sensing a plurality of different wavelengths of light during an image frame; a flash unit configured to emit a plurality of light flashes during the image frame, each wavelength of light detectable by the image sensor corresponding to a wavelength of one of the light flashes of the plurality of light flashes; and a controller configured to generate, for each light flash of the plurality of emitted light flashes, an image using the corresponding wavelength of light sensed by the image sensor.

## Description

### FIELD

The subject-matter of the present disclosure relates to image detecting systems and methods of generating moving images, or movies.

### BACKGROUND

Image detecting systems, such as cameras, are often applied in `vision applications' where the camera output image is interpreted by a computer or algorithm. These `vision applications' also often have controlled lighting (e.g. flash illumination) and are not dependent on environmental lighting conditions. In many applications a high frame rate camera is desirable to reduce system latency or reduce motion artefacts. Higher framerate cameras do exist but are often much more expensive. So, they cannot be used in low-cost applications. In industrial vision applications color information is often not needed.

In "HIGH PERFORMANCE IMAGING USING ARRAYS OF INEXPENSIVE CAMERAS" to E. Wilbum, it was attempted to reduce system latency and motion artefacts by synchronizing multiple, but slightly delayed, image sensors to create a single high-frame rate camera. Such as solution is rather complex since it requires multiple image sensors.

It is an aim of the subject-matter of the present disclosure to improve on the prior art.

### SUMMARY

According to an aspect of the present invention, there is provided an image detecting system, comprising: an image sensor for sensing a plurality of different wavelengths of light during an image frame; a flash unit configured to emit a plurality of light flashes during the image frame, each wavelength of light detectable by the image sensor corresponding to a wavelength of one of the light flashes of the plurality of light flashes; and a controller configured to generate, for each light flash of the plurality of emitted light flashes, an image using the corresponding wavelength of light sensed by the image sensor. Advantageously, the framerate is increased in a much simpler system which only needs one image sensor since the flash unit is operated differently, namely by flashing a plurality of times at different wavelengths of light during the frame.

In an embodiment, the image detecting system, wherein the controller is configured to compile the generate images into a movie.

In an embodiment, the plurality of different wavelengths of light correspond to red, green, and blue light. Using three wavelengths of light increases the frame rate by a factor of three.

In an embodiment, the wavelength of red light is around 650nm, the wavelength of green light is around 540nm, and the wavelength of blue light is around 440nm. Advantageously, these wavelengths reduce cross-talk between the different wavelengths of light. In other words, no blue is mis-interpreted for the green light at 540nm, whereas some green light may be mis-interpreted for blue light at a shorter wavelength that still may be considered green light. Similarly, no red light is mis-interpreted for green light at 540nm, whereas some green light may be mis-interpreted for red light at longer wavelength that still may be considered green.

In an embodiment, the image sensor comprises a plurality of pixel arranged in a Bayer pattern.

In an embodiment, the image sensor is configured to sense light from each line of the image sensor during a sensing period and transfer the detected light during a read-out period following the sensing period, wherein the read-out periods are ordered sequentially to immediately follow a read-out period of a different line.

In an embodiment, the read-out periods are spread over a read-out portion of the frame and a flash portion of the frame is between adjacent read-out portions successive frames, wherein the flash unit is configured to emit the plurality of light flashes during the flash portion of the frame.

In an embodiment, the image sensor is a rolling shutter image sensor.

In an embodiment, the image sensor is a global shutter image sensor.

In an embodiment, the flash unit is configured to emit the plurality of light flashes at a constant frequency. Advantageously, the constant frequency enables multiple frames to be compiled together to make a longer movie than is possible with a single frame.

In an embodiment, the flash unit is configured to emit the plurality of light flashes at a non-constant frequency. Advantageously, the non-constant frequency can be tuned to create bespoke moving image sequences, e.g. a very short movie of three moving images with an extremely high frame rate.

In an embodiment, the controller is further configured to process the generated images to convert the generated images to true color movie.

According to an aspect of the present invention, there is provided a method of generating a moving image, the method comprising: sensing, using an image sensor, a plurality of different wavelengths of light during an image frame; emitting a plurality of light flashes during the image frame, each wavelength of light detectable by the image sensor corresponding to a wavelength of one of the light flashes of the plurality of light flashes; and generating, for each light flash of the plurality of emitted light flashes, an image using the corresponding wavelength of light sensed by the image sensor.

In an embodiment, the method further comprises: compiling the generate images into a movie.

In an embodiment, the plurality of different wavelengths of light correspond to red, green, and blue light.

In an embodiment, the wavelength of red light is around 650nm, the wavelength of green light is around 540nm, and the wavelength of blue light is around 440nm.

In an embodiment, the image sensor comprises a plurality of pixel arranged in a Bayer pattern.

In an embodiment, the method comprises sensing, using the image sensor, light from each line of the image sensor during a sensing period and transferring the sensed light during a read-out period following the sensing period, wherein the read-out periods are ordered sequentially to immediately follow a read-out period of a different line.

In an embodiment, the read-out periods are spread over a read-out portion of the frame and a flash portion of the frame is between adjacent read-out portions of the frame, wherein the emitting, using the flash unit, the plurality of light flashes during frame comprises emitting the plurality of light flashes during the flash period of the frame.

In an embodiment, the image sensor is a rolling shutter image sensor.

In an embodiment, the image sensor is a global shutter image sensor.

In an embodiment, the emitting, using the flash unit, the plurality of light flashes during the frame comprises emitting the plurality of light flashes at a constant frequency.

In an embodiment, the emitting, using the flash unit, the plurality of light flashes during the frame comprises emitting the plurality of light flashes at a non-constant frequency.

In an embodiment, the method further comprises processing the generated images to convert the generated images to true color movie.

These and other aspects of the present invention will be apparent from and elucidated with reference to the embodiment(s) described hereinafter.

### BRIEF DESCRIPTION OF DRAWINGS

The embodiments of the present inventions may be best understood with reference to the accompanying Figures, in which:
Fig. 1 shows a schematic view of an image detecting system according to one or more embodiments;
Fig. 2 shows a schematic view of an image sensor of the image detecting system of Fig. 1;
Fig. 3 shows graph showing degrees of cross-talk between different wavelengths of light;
Fig. 4 shows a time series of image frames for an image sensor of Fig. 2 operating as a global shutter image sensor;
Fig. 5 shows a time series of image frames for an image sensor of Fig. 2 operating as a rolling shutter image sensor; and
Fig. 6 shows a flow chart summarizing a method of generating a moving image according to one or more embodiments.

### DESCRIPTION OF EMBODIMENTS

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

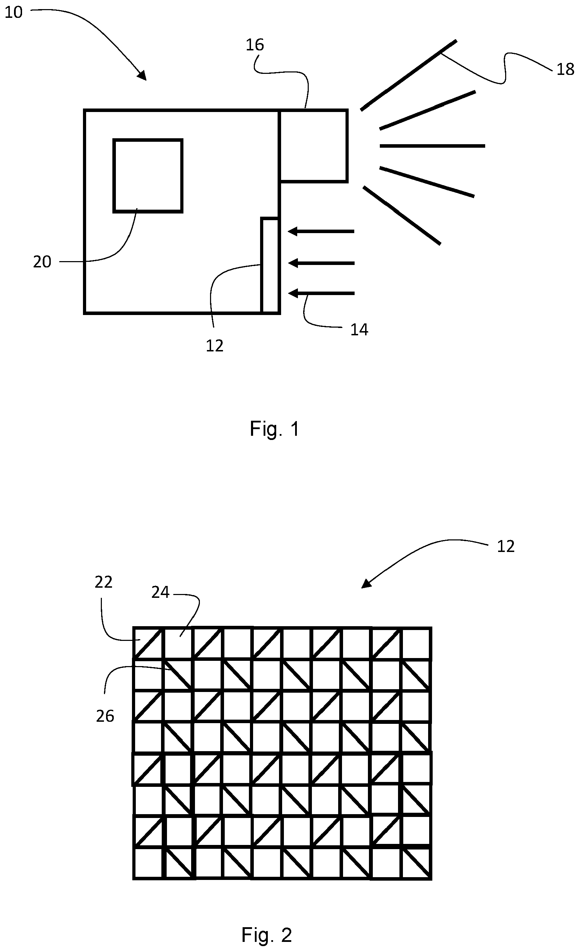

With reference to Fig. 1, according to one or more embodiments, an image detecting system 10 comprises an image sensor 12 for sensing a plurality of different wavelengths of light 14 during an image frame, a flash unit 16 configured to emit a plurality of light flashes 18 during the image frame, each wavelength of light detectable by the image sensor corresponding to a wavelength of one of the light flashes of the plurality of light flashes, and a controller 20 configured to generate, for each light flash of the plurality of emitted light flashes, an image using the corresponding wavelength of light sensed by the image sensor 12.

The controller may be configured to compile the generated images into a movie.

With reference to Fig. 2, the image sensor 12 is an RGB (Red, Green, Blue) image sensor having different pixels for sensing different those respective colors. In this way, the plurality of different wavelengths of light detectable by the image sensor include red, green, and blue light. The different pixels include red pixels 22, green pixels 24, and blue pixels 26. The pixels are distributed over the image sensor in an array including a plurality of lines and a plurality of rows of pixels. An example of an array including those color pixels is a Bayer pattern. The Bayer pattern typically has two times as many green pixels than blue or red pixels in order to fit the three color pixels in a square of 2x2. The choice for twice as many green pixels has to do with the fact that the human eye has highest resolution and is most sensitive for green colors (more than for blue and red colors). But the fact that there are twice as many green pixels is not relevant or important for this invention disclosure.

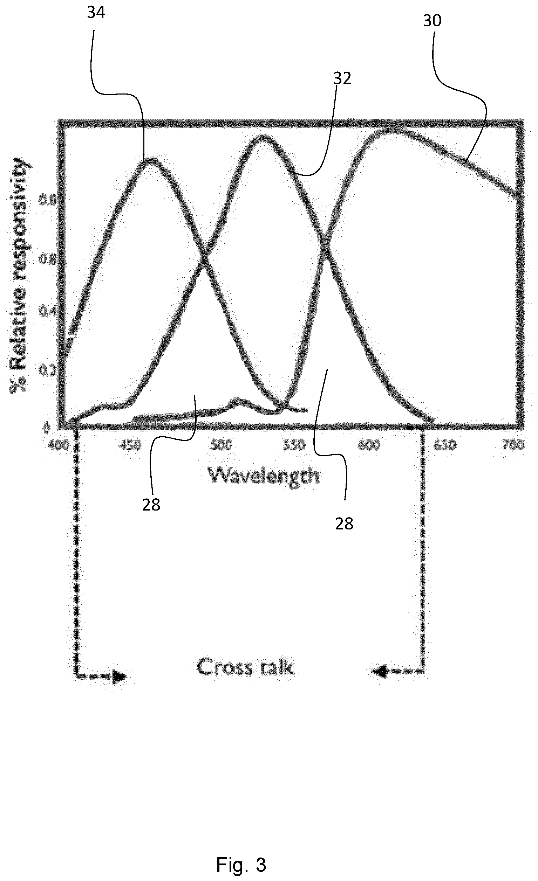

With reference to Fig. 3, each pixel's response to light varies according to the wavelength of the light. The red pixels are mostly sensitive to red light. However, they are also sensitive, to a lesser degree, to green too. The green pixels are mostly sensitive to green light. However, they are also sensitive, to a lesser degree, to red and blue light too. The blue pixels are mostly sensitive to blue light. However, they are also sensitive, to a lesser degree, to green light too. It can be seen from Fig. 3 that the different color pixels have some overlap, which may be called cross-sensitivity. This is indicated by the area of overlap 28 between the red 30, green 32, and blue 34, light absorption profiles. But at specific wavelengths, the cross talk can be minimized. In the example of Fig. 3, that would be 650nm for red, 540nm for green and 440nm for blue.

The remaining cross-sensitivity is a factor for the maximum dynamic range of the signal between the three different illuminations, or the amount of 'noise' in the image between the illuminations in time.

The color channels of the flash unit 16 (Fig. 1) may include light emitting diodes, LEDs. LEDs are chosen because they have very narrow wavelength bands and so provide reduced cross-talk in comparison to other light sources.

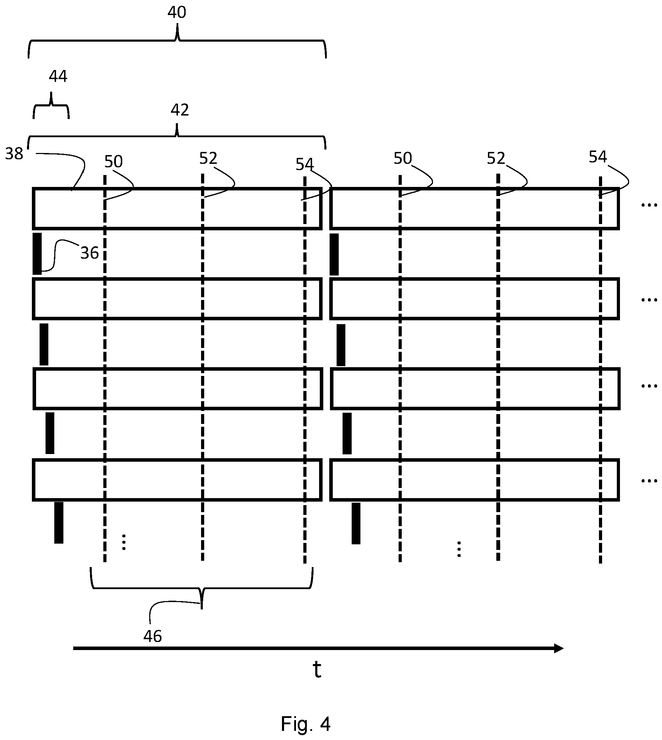

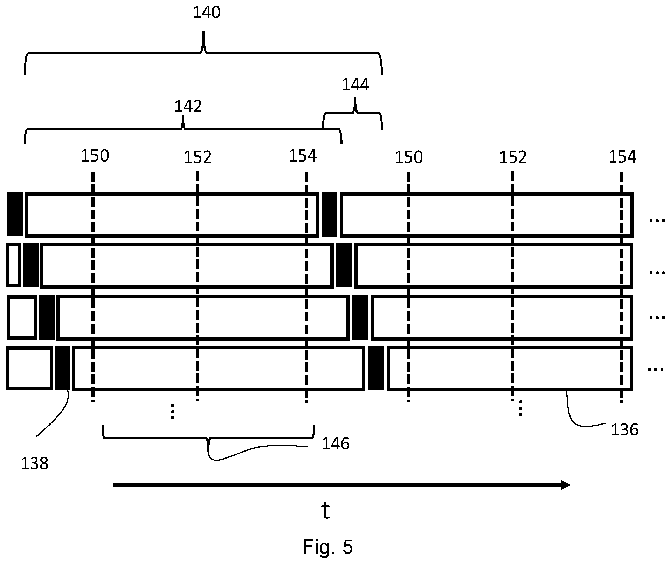

There may be two primary different types of image sensor that work well the present embodiment(s). Those two types of image sensor are global shutter and rolling shutter image sensor. There difference between the two is illustrated by comparing Figs 4 and 5.

With reference to Fig. 4, a global shutter type image sensor employs both a sensing period 38 followed by a read-out period 36 for each line of the image sensor 12 (Fig. 1) in a frame 40. Each line of the image sensor is read out by the controller sequentially. In the global shutter type images sensor, the sensing periods 38 occur simultaneously, or in parallel, for each sensor line. The read-out periods 36 occur in a sequence with a read-out period for one line occurring immediately after a read-out period of another line. In Fig. 4, the read-out periods 36 occur successively with one line's read-out period immediately following a read-out period of an immediately adjacent line. However, the sequence may be different where a read-out period for one line may immediately follow a read-out period of a non-adjacent line.

In a global shutter image sensor, the read-out portion 42 can occur simultaneously with the sensing portion 44. In other words, the read-out portion 42 overlaps the sensing portion 44. The read-out portion 42 reads out signals sensed during a sensing portion 42 of a previous frame 40. This means that the flash portion 46 can also overlap with the read-out portion 42. The advantage of simultaneous sensing and read-out portions in the context of the present invention is that the time between each flash can be equal. For instance, there may be equal time period between each of the red light 50, the green light 52, and the blue light 54. This time period may also be equal to a time period between the blue light 54 and a subsequent red light 50.

In Fig. 5, features of the rolling shutter that are common to the global shutter are only described specifically if they differ, and they are labelled with the same reference but prefixed with a 1.

The sensing periods 138 immediately follow the read-out periods 136, and so the starts and ends of the sensing periods 138 are staggered temporally, which is different to the sensing periods of the global shutter type image sensor which are start and end simultaneously.

The flash portion 46 of the frame overlaps a part of the sensing portion 144 where the sensing periods of all lines are active.

Regardless of the type of image sensor being employed, the image sensor is configured to sense light from each line of the image sensor during a sensing period and transfer the sensed light during a read-out period following the sensing period, wherein the read-out periods are ordered sequentially to immediately follow a read-out period of a different line. In addition, the read-out periods are spread over a read-out portion of the frame and a flash portion of the frame is between adjacent read-out portions of successive frames, wherein the flash unit is configured to emit the plurality of light flashes during the flash portion of the frame.

It should be noted that when a global shutter image sensor is used, it is also possible to use non-flash illumination. This means it is possible to use three light sources (red, green, blue) that each are on for a particular amount of time, but do not produce a very short intense pulse of light (so not light flashes as described above). Obviously, when non-flash illumination is used, the acquired image will suffer from motion blur.

In some very special applications, it might be interesting not to have a constant frame rate that is 3x as high, but to take 3 pictures very shortly after each other (for example only 10 µs spaced apart). This would create a very short movie (with only 3 frames) but with an extremely high frame rate (in this example 100,000 fps). The idea in this invention disclosure can be used to flash the red, green and blue light source with any time spacing in between.

In other words, the flash unit may be configured to emit the plurality of light flashes at a constant frequency. Alternatively, the flash unit may be configured to emit the plurality of light flashes at a non-constant frequency.

Because of the color sequential illumination, very specific motion artifacts will occur in the three color channels of the image. With digital image post processing, using motion compensation techniques, this can be converted back into true color images at a 3-times higher frame rate. In other words, the controller can be further configured to process the generated images to convert the generated images to a true color movie.

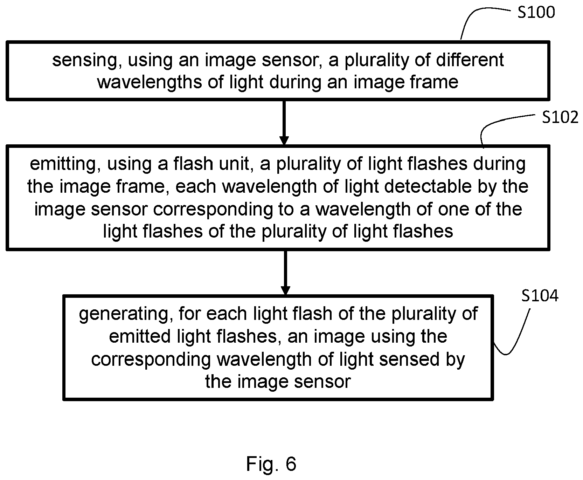

With reference to Fig. 6, according to one or more embodiments, a method of generating a moving image using the foregoing image detecting system may be summarized as including the following steps: sensing S100, using an image sensor, a plurality of different wavelengths of light during an image frame; emitting S102, using a flash unit, a plurality of light flashes during the image frame, each wavelength of light detectable by the image sensor corresponding to a wavelength of one of the light flashes of the plurality of light flashes; and generating S 104, for each light flash of the plurality of emitted light flashes, an image using the corresponding wavelength of light sensed by the image sensor. The method may comprise other optional features covered by the description above relating to the image detecting system as an apparatus. For instance, the method may also include compiling the generate images into a movie.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. An image detecting system (10), comprising:
an image sensor (12) for sensing a plurality of different wavelengths of light (14) during an image frame (40);
a flash unit (16) configured to emit a plurality of light flashes (18) during the image frame, each wavelength of light detectable by the image sensor corresponding to a wavelength of one of the light flashes of the plurality of light flashes; and
a controller (20) configured to generate, for each light flash of the plurality of emitted light flashes, an image using the corresponding wavelength of light sensed by the image sensor.

2. The image detecting system, wherein the controller is configured to compile the generate images into a movie.

3. The image detecting system of Claim 1 or Claim 2, wherein the plurality of different wavelengths of light correspond to red, green, and blue light.

4. The image detecting system of Claim 3, wherein the wavelength of red light is around 650nm, the wavelength of green light is around 540nm, and the wavelength of blue light is around 440nm.

5. The image detecting system of any preceding claim, wherein the image sensor comprises a plurality of pixel arranged in a Bayer pattern.

6. The image detecting system of any preceding claim, wherein the image sensor is configured to sense light from each line of the image sensor during a sensing period and transfer the detected light during a read-out period (36) following the sensing period (38), wherein the read-out periods are ordered sequentially to immediately follow a read-out period of a different line.

7. The image detecting system of Claim 6, wherein the read-out periods are spread over a read-out portion (44) of the frame and a flash portion (46) of the frame is between adjacent read-out portions successive frames, wherein the flash unit is configured to emit the plurality of light flashes during the flash portion of the frame.

8. The image detecting system of Claim 6 or Claim 7, wherein the image sensor is a rolling shutter image sensor.

9. The image detecting system of Claim 6 or Claim 7, wherein the image sensor is a global shutter image sensor.

10. The image detecting system of any preceding claims, wherein the flash unit is configured to emit the plurality of light flashes at a constant frequency.

11. The image detecting system of any of Claims 1 to 9, wherein the flash unit is configured to emit the plurality of light flashes at a non-constant frequency.

12. The image detecting system of any preceding claim, wherein the controller is further configured to process the generated images to convert the generated images to true color movie.

13. A method of generating a moving image, the method comprising:
sensing (S100), using an image sensor, a plurality of different wavelengths of light during an image frame;
emitting (S102), using a flash unit, a plurality of light flashes during the image frame, each wavelength of light detectable by the image sensor corresponding to a wavelength of one of the light flashes of the plurality of light flashes; and
generating (S104), for each light flash of the plurality of emitted light flashes, an image using the corresponding wavelength of light sensed by the image sensor.

14. The method of Claim 13, further comprising:
compiling the generate images into a movie.
